Europäisches Patentamt

**European Patent Office**

**Office européen des brevets**

(11) Veröffentlichungsnummer: **0 036 604**
A2

## (12) EUROPÄISCHE PATENTANMELDUNG

(21) Anmeldenummer: **81101944.7**

(51) Int. Cl.³: **B 01 D 59/34**

(22) Anmeldetag: **16.03.81**

(30) Priorität: **25.03.80 DE 3011495**

(43) Veröffentlichungstag der Anmeldung: **30.09.81**
**Patentblatt 81/39**

(84) Benannte Vertragsstaaten: **FR GB**

(71) Anmelder: **KRAFTWERK UNION AKTIENGESELLSCHAFT, Wiesenstrasse 35, D-4330 Mülheim (Ruhr) (DE)**

(72) Erfinder: **Niemann, Hans-Joachim, Dr., Egerlandstrasse 31, D-8523 Baiersdorf-Hagenau (DE)**

(74) Vertreter: **Mehl, Ernst, Dipl.-Ing. et al, Postfach 22 01 76, D-8000 München 22 (DE)**

(54) **Einrichtung zur stoffspezifischen Bestrahlung eines in einer schlitzförmigen Düse entspannten gasförmigen Stoffgemisches.**

(57) Das isotopenspezifisch anzuregende Stoffgemisch wird in einer Düse (2) adiabatisch entspannt und damit auf unter 100 K abgekühlt. Durch konstruktive Elemente im nachfolgenden Behandlungsraum (1) werden Verdichtungsstösse (23) ausgelöst, wie sie auch zur Erzeugung des Druckrückgewinns bekannt sind. Neu ist der Einstrahlungsort für die Laserstrahlung, der im Bereich des Verdichtungsstosses (23) bzw. kurz danach liegt.

KRAFTWERK UNION AKTIENGESELLSCHAFT    Unser Zeichen
VPA 80 P 9 3 1 8 E

Einrichtung zur stoffspezifischen Bestrahlung eines
in einer schlitzförmigen Düse entspannten gasförmigen
Stoffgemisches

Die vorliegende Erfindung betrifft eine Einrichtung
zur stoffspezifischen Bestrahlung eines in einer schlitzförmigen Düse entspannten gasförmigen Stoffgemisches
mit Infrarot- und/oder UV-Laserlicht, das vor der Schlitzdüse vorbeigeführt wird und diese Einrichtung Vorrichtungen zur Erzeugung gasdynamischer Stöße, die gleichzeitig auch der Druckrückgewinnung dienen können, enthält. Diese stoffspezifische Bestrahlung, durch die ein
ganz bestimmter Stoff angeregt und damit reaktionsfreudiger gemacht wird, kann insbesondere zur Isotopentrennung
bzw. Anreicherung Verwendung finden. So wurde bereits
vielfach vorgeschlagen, nach diesem Prinzip eine Urananreicherung auszuführen. Angereichertes Uran mit einem
Gehalt von etwa 3 % am Isotop Uran 235 wird als Kernbrennstoff in leichtwassergekühlten Kernreaktoren verwendet.
Solche Verfahren sind beispielsweise in den deutschen
Offenlegungsschriften 24 47 762 und 26 53 795 beschrieben.
Zur Anregung wird ein Infrarotlaser, der im 16 $\mu$-Gebiet
arbeitet oder ein UV-Laser mit einer Wellenlänge $< 420$ nm
oder eine Kombination beider Laser vorgeschlagen.

Bei der Entwicklung dieser Verfahrenstechnik hat es sich
herausgestellt, daß es zweckmäßig ist, das $UF_6$-Gas sehr
stark zu unterkühlen, damit die Absorptionslinien der
einzelnen Isotopen getrennt voneinander sichtbar werden

Mü 2 Ant / 19.3.1980

und dann auch getrennt, also isotopenspezifisch anregbar sind. Diese Abkühlung wird durch adiabatische Entspannung in einer Düse bewirkt. Damit ist aber auch eine Verdünnung des $UF_6$-Gases und vor allem bei Verwendung von UV-Lasern eine große Erniedrigung der Gesamtabsorption verbunden, die nur durch eine komplexe optische Strahlführung, z.B. mit Hilfe eines mehrfachen Lichtweges, aufgefangen werden kann.

Diese Verdünnung ist aber auch nachteilig im Hinblick auf eine Verfahrensführung, die möglichst viel optisch angeregtes 235 $UF_6$ in das physikalisch leicht abtrennbare Produkt $UF_5$ umwandeln soll. Denn für eine monomolekulare Kollisionsprädissoziation, wie sie z.B. in der deutschen Offenlegungsschrift 2 40 35 80 erwähnt wird, sind Stöße mit Inertgasmolekülen notwendig, für eine bimolekulare Reaktion müssen Stöße mit den Reaktionspartnern stattfinden. Da aber der Gasstrahl sich mit Überschallgeschwindigkeit bewegt, müssen die chemischen Umwandlungsprozesse, also die erwähnte Kollisionsprädissoziation und/oder die bimolekulare Reaktion, genügend schnell ablaufen, was bei kleinen Konzentrationen im Strahl - durch die Verdünnung bedingt - eine ernst zu nehmende Schwierigkeit darstellt.

Da aber von einer Unterkühlung bzw. adiabatischen Entspannung des anzuregenden Stoffgemisches aus den oben angegebenen Gründen nicht abgegangen werden kann, stellte sich die Aufgabe, Einrichtungen zu schaffen, mit denen die sich aus der Gasverdünnung ergebenden Nachteile wesentlich verringert werden können.

Diese Aufgabe wird erfindungsgemäß dadurch gelöst, daß in der Bestrahlungseinrichtung als Ort für die Lasereinstrahlung das Gebiet der Verdichtungsstöße sowie das strömungsabwärts anschließende Gebiet des Stoffgemischstrahles vorgesehen ist.

In Verbindung mit dem bereits erwähnten Stand der Technik sei der Grundgedanke dieser Erfindung nochmals kurz zusammengefaßt.

Die adiabatische Entspannung des $UF_6$-Gases in einer Überschalldüse bekannter Art sorgt für eine Abkühlung auf Temperaturen unter 100 K, wobei die vielen bei Raumtemperatur angeregten Vibrationen des $UF_6$ gelöscht werden und alle Moleküle in einen einheitlichen Grundzustand kommen. Das hat zur Folge, daß das optische Spektrum des $UF_6$ sehr einfach wird und im Infrarot- und im nahen UV-Gebiet Strukturen zeigt, die geeignet sind, 235 $UF_6$ mit ausreichender Selektivität anzuregen und fotochemisch oder physikalisch abzutrennen. Erzeugt man nun in dem abgekühlten Überschallstrahl einen gasdynamischen schrägen oder senkrechten Stoß, wie er bereits zur Druckrückgewinnung vorgeschlagen worden ist, so wird ein Druck-, Dichte- und Temperaturanstieg erzeugt, ohne daß sofort viele Vibrationen des $UF_6$ wieder angeregt werden, die das Spektrum erneut verwischen würden. Vielmehr erfordert die Vibrationsanregung eine Reihe von Stößen, die erst nach einer gewissen Zeit stattgefunden haben, was in dem jetzt nach dem Stoß langsamer, z.B. mit Unterschallgeschwindigkeit strömenden Strahl einer gewissen Wegstrecke entspricht. In dieser bleibt der $UF_6$-Strahl trotz erhöhter Vibrations- und Rotationstemperatur vibrationsabgekühlt und somit für kurze Zeit weiterhin noch selektiv anregbar. In Anbetracht der höheren Dichte im bzw. hinter dem gasdynamischen Stoß sind daher die Möglichkeiten für den fotochemischen Anregungs- und Abtrennprozeß sehr viel günstiger als vor dem Stoß.

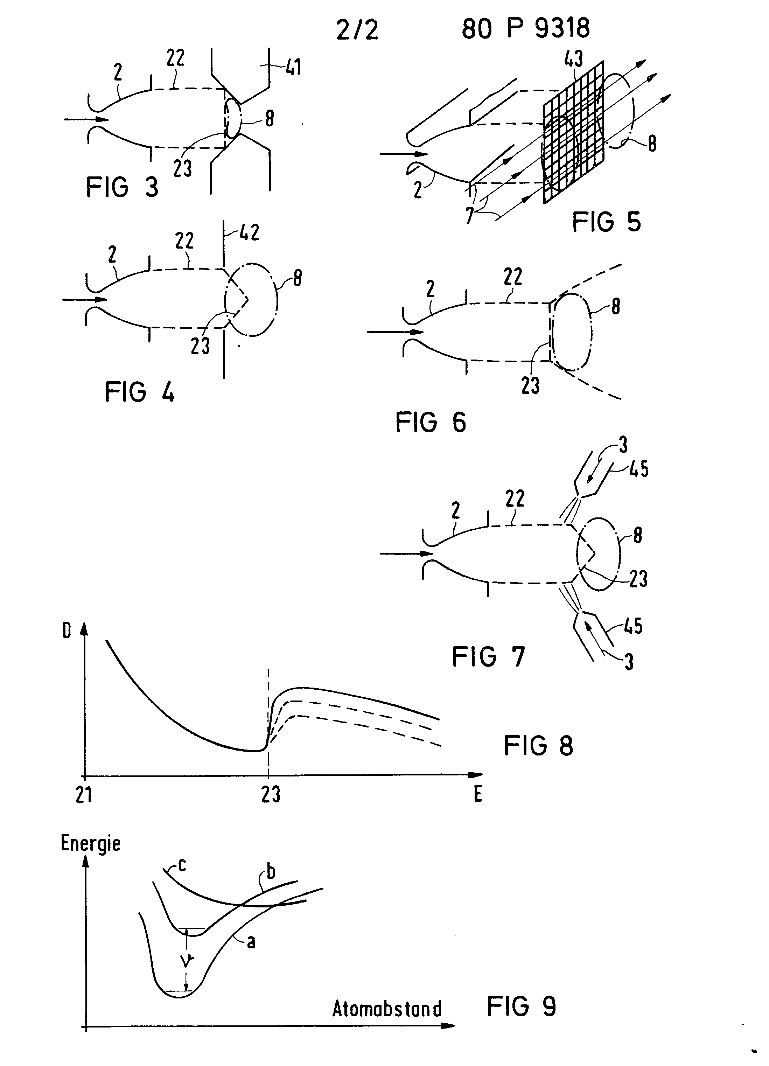

So ist zunächst die Dichte des $UF_6$-Gases wesentlich größer, z.B. um den Faktor 5, was mit einer höheren Ausnutzung des Laserlichtes bei kleinerem optischen Aufwand verbunden ist. Wenn es bisher geplant war, die Anregung mit Hilfe einer 10 m langen Düse und einem dreifachen Lichtweg zu realisieren, so genügen nunmehr 2 m Düsenlänge mit einer wesentlich erleichterten Lichtführung. Durch diesen erhöhten Druck ist weiterhin eine wesentlich höhere bimolekulare Reaktionsgeschwindigkeit zwischen einem angeregten 235 $UF_6$-Molekül und dem zugesetzten Reaktionspartner, wie sie aus dem Schrifttum bekannt sind, gegeben. Diese Geschwindigkeitszunahme entspricht dabei etwa dem Quadrat des Druckanstieges. In diesem Zusammenhang sei darauf hingewiesen, daß die bereits erwähnte Kollisionsprädissoziation bei unterschwelliger Anregung, also einer Anregung unterhalb des Prädissoziationskreuzungspunktes der $UF_6$-Potentialkurven - siehe Fig. 9 - möglich ist.

Parallel zum Druckanstieg erhöht sich auch die Rotationstemperatur um etwa den Faktor 2 - 3, da sich das Rotationsgleichgewicht nach sehr wenigen Stößen einzustellen vermag. Dies bedeutet, daß sich die Q-Zweige im Infrarotgebiet bei 16 /u verbreitern, so daß die an sich bekannte Anregung dort mit breitbandigeren Lasern möglich ist, die wesentlich einfacher und billiger als schmalbandige hergestellt werden können. Dies wirkt sich auch auf die Abstimmöglichkeit zwischen Laser- und 235 $UF_6$-Frequenz über den Q-Zweig aus. Da viele 16 /u-Laser - wie z.B. $CF_4$ - Laser nicht beliebig abstimmbar sind,

0036604

sondern mit ihrer Emissionsfrequenz nur in die Nähe des 235 $UF_6$ - $\nu$ 3 - Q-Zweiges gebracht werden können, kann der Abstand zwischen Tieftemperatur Q-Zweig und Laser-Emission durch Erhöhung der Rotationstemperatur im schrägen bis senkrechten Stoß und der damit verbundenen Verbreiterung des Q-Zweiges überwunden werden. Die hohe Rotationstemperatur sorgt aber für eine bessere Besetzung in den für die Anregung im nahen UV-Gebiet wichtigen Bandkanten. Zwar zeigt das $UF_6$-Spektrum zwischen 420 und 360 nm im Tieftemperaturbereich einige Banden mit steilen Kanten, andererseits sind aber bei anderen Banden die Bandkanten bei höheren Reaktionstemperaturen stark besetzt und damit für eine optisch selektive Anregung besonders geeignet. Einerlei, welche $UF_6$-Banden man für die selektive Anregung wählt, so ist es über den mehr oder weniger schrägen Stoß, der durch konstruktive Maßnahmen einstellbar ist, möglich, die jeweils optimale Rotationstemperatur zu erzielen.

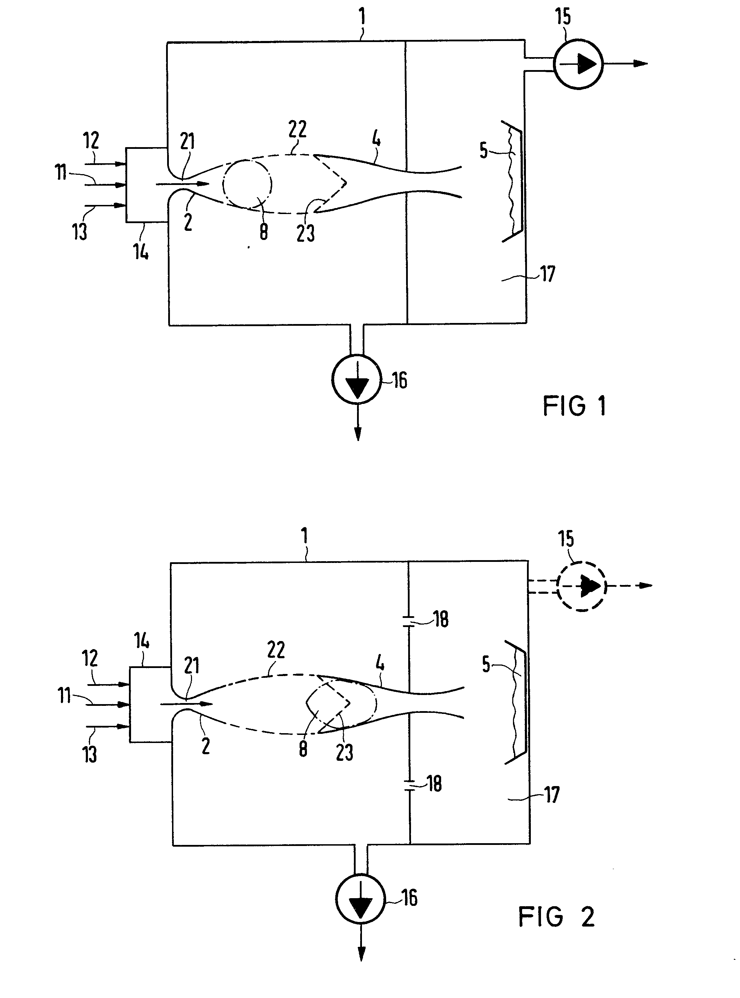

Zur weiteren Veranschaulichung dieser Erfindung sei nun auf die Fig. 1 bis 9 verwiesen, in denen neben dem Stand der Technik in schematischer Weise die zur Erzielung der genannten Effekte geeigneten Einrichtungen dargestellt sind.

Fig. 1 zeigt eine Einrichtung, wie sie üblicherweise zur Laserisotopentrennung verwendet wird. Die Wandung des Behandlungsgefäßes 1 ist mit einer Düse 2 versehen, durch die ein Stoffgemischstrahl 22 adiabatisch entspannt wird. Dieser Stoffgemischstrahl setzt sich aus den in der vorgeschalteten Mischkammer 14 eingeleiteten Gasen 12,

0036604

11 und 13 zusammen, von denen das eine beispielsweise UF$_6$ ist, das andere ein Reaktionspartner wie z.B. Wasserstoff und das dritte ein Zusatzgas zur Beeinflussung des Adiabatenkoeffizienten, wie z.B. Helium.

Innerhalb des Behandlungsgefäßes 1 und nach dem Verlassen der Düse 2 hat der Stoffgemischstrahl etwa die Form 22 und tritt in einen Diffusor 4 ein, in dem eine Druckrückgewinnung stattfindet. Der Diffusor 4 mündet aus in einen Raum 17 mit einem Druck, der gegenüber dem Behandlungsraum 1 erhöht ist. Über eine Pumpe 15 ist dieser Raum an ein nicht dargestelltes Sammelgefäß für die nicht verbrauchten Gase angeschlossen. Der eigentliche Behandlungsraum 1 wird durch die Pumpe 16 auf Unterdruck gehalten. Auch diese ist an ein Sammelgefäß angeschlossen, in dem die durch den Diffusor 4 abgetrennten Stoffgemischanteile zurückgewonnen werden. Der sich am Anfang des Diffusors ausbildende Verdichtungsstoß ist mit 23 bezeichnet und hat hier lediglich die Aufgabe, zur Druckrückgewinnung, also für die Verringerung des Pumpaufwandes zu sorgen. Der zur Anregung der einen Isotopenverbindung benötigte Laserstrahl durchsetzt den Stoffgemischstrahl 22 direkt vor der Ausmündung der Düse 2, sein Querschnitt ist mit 8 bezeichnet. Die durch diese Anregung erreichte fotochemische Umwandlung des UF$_6$ bewirkt die Entstehung von UF$_5$, das sich als Feststoff in der Auffangeinrichtung 5 des Raumes 17 sammelt.

Demgegenüber zeigt die Fig. 2 praktisch die gleiche apparative Einrichtung, jedoch ist der Einstrahlungsort 8 des Laserstrahles im Stoffgemischstrahl 22 in den Bereich des Verdichtungsstoßes 23 versetzt, so daß nunmehr die vorbeschriebenen Wirkungen eintreten können. In dieser Darstellung sind außerdem in der Zwischenwand zwischen den Räumen 1 und 17 noch Durchbrechungen 18 eingezeichnet, die als Drosselstellen wirken, so daß die hier nur gestrichelt angedeutete Pumpe 15 entweder ganz entfallen oder wesentlich kleiner gehalten werden kann. Durch diese Drosselstelle 18 läßt sich eine selbsttätige Regelung des im Raum 17 gewünschten Druckes einstellen.

Die weiteren Figuren zeigen lediglich die Zuordnung von Düse 2 und Verdichtungsstoß 23 bzw. der Einrichtung zur Erzeugung desselben.

Nach Fig. 3 ist zur Erzeugung eines geradlinigen Verdichtungsstoßes 23, der senkrecht zur Strömungsrichtung des Stoffgemischstrahles 22 verläuft, eine Blende 41 vorgesehen, deren Öffnung eine keilförmige Gestalt aufweist. Die Lage und die Form des Querschnittes des Laserstrahles ist wieder mit 8 bezeichnet.

Die Fig. 4 zeigt eine blechförmige Blende 42, durch die ein mehr pfeilförmiger Verdichtungsstoß 23 - ähnlich wie in Fig. 2 - erzeugt wird. Der Querschnitt der Laserstrahlung 8 überdeckt zum Teil diese Stoßfront und erstreckt sich noch weiter in Richtung abwärts der Strömung des Stoffgemisches 22.

Eine weitere Möglichkeit zur Erzeugung eines Verdichtungsstoßes senkrecht zur Strömungsrichtung ist in Fig. 5 dargestellt. Hier ist in den Strömungsweg ein feines Sieb 43 gestellt, hinter dem die Laserstrahlung mit dem Querschnitt 8 verläuft. Die Stellung dieses Haarsiebes 43 ergibt dabei gleichzeitig die Richtung der Verdichtungsstöße und ist somit ein einfaches Mittel zur Einstellung der gewünschten Rotationstemperaturen. Das Sieb 43 kann beispielsweise aus einer Metallfolie von 0,1 mm Dicke bestehen, die mit Hilfe von Laserstrahlen siebartig mit feinsten Bohrungen versehen ist. Das Sieb kann selbstverständlich auch aus Draht gefertigt werden, wobei die Drähte beispielsweise eine Dicke von 0,1 mm haben und die Maschenweite in der Größenordnung von 0,3 mm liegt.

In der Anordnung nach Fig. 6 sind keine besonderen mechanischen Vorkehrungen zur Erzeugung des Verdichtungsstoßes vorgesehen, in jeder Überschallströmung 22 bildet sich nach einer gewissen Zeit von selbst ein derartiger Verdichtungsstoß in Gestalt einer sogenannten Machscheibe 23 aus . Hinter dieser Zone ist wiederum die Bestrahlungszone 8 angeordnet. Eine derartige Machscheibe bildet sich auch aus, wenn die Düse 2 in nichtdargestellter Weise zu einem Kanal verlängert ist, also die Strömung 22 darin geführt bleibt.

Die Fig. 7 zeigt schließlich die Erzeugung eines Druckstoßes 23 durch oberhalb und unterhalb des Stoffgemischstrahles 22 angeordnete Düsen 45, durch die ein Zusatzgas 3 einströmt. Dieses Zusatzgas kann auch der Reaktionspartner sein, der sich in dem sich bildenden Verdichtungsstoß 23 innig mit der anzuregenden Gasströmung 22 mischt. Auch hier umfaßt die Bestrahlungszone 8 den Verdichtungsstoß selbst und das anschließende Gebiet.

Die Fig. 8 zeigt nun zur Erläuterung der eingangs geschilderten Verhältnisse die Abhängigkeit der Dichte D im Gasstrahl von der Entfernung E des Stoffgemischstrahles 22 vom Düsenhals 21. Hieraus ist zu entnehmen, daß die Dichte des Gasstrahles kurz vor dem Verdichtungsstoß 23 den geringsten Wert erreicht hat und im Verdichtungsstoß sehr steil ansteigt. Durch unvermeidbare Verluste geht der Druckanstieg nicht mehr bis zum ursprünglichen Wert. Je nach Neigung des Druckstoßes zur Richtung des Stoffgemischstrahles 22 ergeben sich die gestrichelten Verläufe der Kurve nach dem Verdichtungsstoß 23, wobei die ausgezogene Kurve für den Fall des senkrecht zur Strömungsrichtung verlaufenden Verdichtungsstoßes gilt. Parallel zum Druckverlauf verläuft, wie auch ebenfalls bereits geschildert, die erreichte Rotationstemperatur, so daß aus dieser Grafik die Wirkungsweise und die Einstellbarkeit dieser erfindungsgemäßen Einrichtung anschaulich hervorgeht.

Die schließlich in Fig. 9 dargestellte Grafik erläutert die Kollisionsprädissoziation. Dabei wird zunächst die Potentialkurve a durch die Laserstrahlung $\nu$ auf die Potentialkurve b angehoben und durch Stöße mit benachbarten Molekülen, schließlich die Dissoziationskurve c erreicht.

Diese hier dargestellten Beispiele zeigen, daß es in mannigfacher Weise möglich ist, Verdichtungsstöße gezielt und von genau gewünschtem Verlauf zu erzeugen. Es sind daher auch noch mannigfache Variationen der hier dargestellten Elemente zur Beeinflussung und zur Erzeugung der Dichtungsstöße denkbar. Diese Erzeugungsmöglichkeiten müssen an sich nicht neu sein, sie können vielfach auch bereits Büchern über die Strömungslehre entnommen werden.

9 Figuren
5 Patentansprüche

## Patentansprüche

1. Einrichtung zur stoffspezifischen Bestrahlung eines in einer schlitzförmigen Düse entspannten gasförmigen Stoffgemisches mit Infrarot- und/oder UV-Laserlicht, das vor der Schlitzdüse vorbeigeführt wird und diese Einrichtung Vorrichtungen zur Erzeugung gasdynamischer Stöße, die gleichzeitig auch der Druckrückgewinnung dienen können, enthält, d a d u r c h g e k e n n - z e i c h n e t , daß als Ort für die Lasereinstrahlung das Gebiet der Verdichtungsstöße (23) sowie das strömungsabwärts anschließende Gebiet des Stoffgemischstrahles (22) vorgesehen ist.

2. Einrichtung nach Anspruch 1, d a d u r c h g e - k e n n z e i c h n e t , daß zur Erzeugung der gasdynamischen Stöße (23) besondere Bauteile, wie Diffusoren, Blenden oder Ablenkkörper vorgesehen sind.

3. Einrichtung nach Anspruch 1, d a d u r c h g e - k e n n z e i c h n e t , daß zur Erzeugung gasdynamischer Stöße die Zuführung von Zusatzgasen (3) in den aus der Düse (2) kommenden entspannten Stoffgemischstrahl (22) vorgesehen ist.

4. Einrichtung nach den Ansprüchen 1 bis 3, d a - d u r c h g e k e n n z e i c h n e t , daß die gewünschte Rotationstemperatur des Stoffgemischstrahles (22) nach der Stoßstelle (23) über die Richtung der Verdichtungsstöße zur Richtung des Stoffgemischstrahles einstellbar ist.

5. Anwendung der Einrichtung nach den Ansprüchen 1 bis 3 zur Urananreicherung nach dem Grundprinzip der isotopenselektiven Anregung von $UF_6$.

FIG 1

FIG 2

FIG 3

FIG 4

FIG 5

FIG 6

FIG 7

FIG 8

FIG 9